(19) Europäisches Patentamt / European Patent Office / Office européen des brevets

(11) **EP 3 259 308 B1**

(12) **EUROPEAN PATENT SPECIFICATION**

(45) Date of publication and mention
of the grant of the patent:
**23.10.2019 Bulletin 2019/43**

(21) Application number: **16752082.4**

(22) Date of filing: **02.02.2016**

(51) Int Cl.:
*C08J 9/28* *(2006.01)*        *C08L 83/04* *(2006.01)*

(86) International application number:
**PCT/JP2016/000536**

(87) International publication number:
**WO 2016/132691 (25.08.2016 Gazette 2016/34)**

(54) **SPONGE-FORMABLE SILICONE RUBBER COMPOSITION AND SILICONE RUBBER SPONGE**

ZU EINEM SCHWAMM FORMBARE SILIKONKAUTSCHUKZUSAMMENSETZUNG UND SILIKONKAUTSCHUKSCHWAMM

COMPOSITION DE CAOUTCHOUC DE SILICONE APTE À FORMER UNE ÉPONGE ET ÉPONGE EN CAOUTCHOUC DE SILICONE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.02.2015 JP 2015027388**

(43) Date of publication of application:
**27.12.2017 Bulletin 2017/52**

(73) Proprietor: **Dow Toray Co., Ltd.**
**Tokyo (JP)**

(72) Inventor: **IRIE, Masakazu**
**Ichihara-shi**
**Chiba 299-0108 (JP)**

(74) Representative: **Murgitroyd & Company**
**Scotland House**
**165-169 Scotland Street**
**Glasgow G5 8PL (GB)**

(56) References cited:
**WO-A1-2005/085357        WO-A1-2010/013847**
**JP-A- 2013 234 268        JP-A- 2014 051 550**
**JP-A- 2014 139 290        US-A1- 2011 021 649**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Technical Field

The present invention relates to a sponge-formable silicone rubber composition, and to a silicone rubber sponge obtained by crosslinking of the composition by a hydrosilylation reaction.

## Background Art

Due to having excellent heat resistance and weather resistance, being light-weight, and having low thermal conductivity, silicone rubber sponge is used in various seal materials such as packings, gaskets, and O-rings; rollers and belts of image forming devices such as copiers and printers; and automotive parts such as hood cushioning pads and engine vibration-proofing materials.

Silicone rubber compositions for forming such silicone rubber sponges that have been proposed include an emulsion composition for silicone rubber composed of a polydiorganosiloxane having at least two silicon-bonded alkenyl groups per molecule, a polyorganosiloxane having at least two silicon-bonded hydrogen atoms per molecule, water containing smectite clay, an emulsifier, and a platinum-based catalyst (see Patent Document 1); and a sponge-formable liquid silicone rubber composition composed of a polydiorganosiloxane capped at both molecular terminals with alkenyl groups and not having an alkenyl group in side molecular chains, a polydiorganosiloxane having at least two alkenyl groups in side molecular chains, a polyorganosiloxane having at least two silicon-bonded hydrogen atoms per molecule, a mixture of water and an inorganic thickening agent, an emulsifier, a hydrosilylation reaction catalyst, and a curing retarder (see Patent Document 2). A silicone rubber sponge can be formed by curing such a silicone rubber composition in a uniform emulsified state in a mold and then removing water from the obtained silicone rubber.

However, when such a sponge-formable silicone rubber composition is molded in a mold, the inorganic thickening agent adheres to the mold and contaminates it, and there are the problems that defects in appearance occur in the obtained silicone rubber sponge and molding workability becomes poor unless the mold is cleaned frequently.

## Citation List

## Patent Literature

Patent Document 1: Japanese Unexamined Patent Application Publication No. 2004-346248A
Patent Document 2: Japanese Unexamined Patent Application Publication No. 2008-214625A

## Summary of Invention

## Technical Problem

An object of the present invention is to provide a sponge-formable silicone rubber composition that can form a silicone rubber sponge having uniform and fine bubbles and that does not readily contaminate a mold, and such a silicone rubber sponge.

## Solution to Problem

The sponge-formable silicone rubber composition of the present invention comprises:

(A) 100 parts by mass of a polyorganosiloxane having at least two silicon-bonded alkenyl groups per molecule;
(B) a polyorganosiloxane having at least two silicon-bonded hydrogen atoms per molecule, in an amount such that an amount of silicon-bonded hydrogen atoms in component (B) is from 0.4 to 20 moles per 1 mole of alkenyl groups in component (A);
(C) from 20 to 500 parts by mass of water;
(D) cellulose nanofibers having a number-average fiber diameter of 2 to 150 nm, in an amount of from 0.01 to 15 parts by mass per 100 parts by mass of component (C);
(E) from 0.1 to 15 parts by mass of an emulsifier; and
(F) a hydrosilylation reaction catalyst, in an amount to accelerate a hydrosilylation reaction of the composition.

The silicone rubber sponge of the present invention is obtained by crosslinking the composition by a hydrosilylation reaction and then removing water from the obtained silicone rubber, or removing water while crosslinking the composition by a hydrosilylation reaction.

**Effect of Invention**

The sponge-formable silicone rubber composition of the present invention is able to form a silicone rubber sponge having uniform and fine bubbles and not readily contaminating a mold. Furthermore, the silicone rubber sponge of the present invention has uniform and fine bubbles.

**Detailed Description of the Invention**

First, the sponge-formable silicone rubber composition of the present invention will be described in detail.

The polyorganosiloxane for component (A) is a base compound of the present composition and has at least two silicon-bonded alkenyl groups per molecule. Examples of the alkenyl groups in component (A) include alkenyl groups having from 2 to 8 carbons such as a vinyl group, an allyl group, an isopropenyl group, a butenyl group, an isobutenyl group, a pentenyl group, a hexenyl group, a heptenyl group, and an octenyl group, among which a vinyl group is preferred. The bonding position of the alkenyl groups may be a silicon atom at the end of the molecular chain and/or a silicon atom in the molecular chain, without limitation. The silicon atom at the end of the molecular chain is preferred. Furthermore, examples of silicon-bonded organic groups other than alkenyl groups in component (A) include alkyl groups having from 1 to 8 carbons such as a methyl group, an ethyl group, a propyl group, a butyl group, a pentyl group, a hexyl group, a heptyl group, and an octyl group; cycloalkyl groups having from 5 to 8 carbons such as a cyclopentyl group, a cyclohexyl group, a cycloheptyl group, and a cyclooctyl group; an aryl group having from 6 to 12 carbons such as a phenyl group, a tolyl group, a xylyl group, and a naphthyl group; an aralkyl having from 7 to 12 carbons such as a benzyl group and a phenethyl group; and monovalent hydrocarbon groups in which some or all of the hydrogen atoms in these monovalent hydrocarbon groups has been substituted with a halogen atom such as fluorine or chlorine. A methyl group or a phenyl group is preferred.

Examples of the molecular structure of component (A) include linear, partially branched linear, branched chain, cyclic, or resinoid, without limitation. Linear or partially branched linear is preferred. Component (A) is preferably a linear polyorganosiloxane capped at both molecular terminals with triorganosiloxy groups in which the main chain is composed of repeating diorganosiloxane units, of which the molecular structure may also be partially branched chain or cyclic.

Examples of such component (A) include dimethylpolysiloxanes capped at both molecular terminals with dimethylvinylsiloxy groups, dimethylpolysiloxanes capped at both molecular terminals with diphenylvinylsiloxy groups, dimethylsiloxane-methylphenylsiloxane copolymers capped at both molecular terminals with dimethylvinylsiloxy groups, dimethylsiloxane-diphenylsiloxane copolymers capped at both molecular terminals with dimethylvinylsiloxy groups, dimethylsiloxane-methylphenylsiloxane copolymers capped at both molecular terminals with diphenylvinylsiloxy groups, dimethylsiloxane-methylvinylsiloxane copolymers capped at both molecular terminals with dimethylvinylsiloxy groups, dimethylsiloxane-methylphenylsiloxane-methylvinylsiloxane copolymers capped at both molecular terminals with dimethylvinylsiloxy groups, dimethylsiloxane-diphenylsiloxane-methylvinylsiloxane copolymers capped at both molecular terminals with dimethylvinylsiloxy groups, methylvinylpolysiloxanes capped at both molecular terminals with trimethylsiloxy groups, methylvinylsiloxane-methylphenylsiloxane copolymers capped at both molecular terminals with trimethylsiloxy groups, methylvinylsiloxane-diphenylsiloxane copolymers capped at both molecular terminals with trimethylsiloxy groups, and dimethylsiloxane-methylvinylsiloxane copolymers capped at both molecular terminals with trimethylsiloxy groups. A combination of two or more polyorganosiloxanes having the above molecular structures may also be used as component (A).

The viscosity of the component (A) is not limited, but viscosity at 25°C is preferably not less than 50 mPa·s or not less than 100 mPa·s, and not greater than 100,000 mPa·s. This is because if the viscosity of component (A) is not less than the aforementioned lower limit and not greater than the aforementioned upper limit, an emulsion of the obtained silicone rubber composition is stable and a silicone rubber sponge having uniform bubbles is readily obtained. Note that the viscosity at 25°C of this polyorganosiloxane may be measured by, for example, a B-type viscometer in conformance with JIS K7117-1.

The polyorganosiloxane for component (B) is a crosslinking agent of the present composition and has at least two silicon-bonded hydrogen atoms per molecule. The silicon-bonded hydrogen atoms in component (B) may be bonded to silicon atoms at the end of the molecular chain and/or silicon atoms in the molecular chain. Examples of the molecular structure of component (B) include linear, partially branched linear, branched chain, cyclic, or resinoid, without limitation. Linear or partially branched linear is preferred. Linear polyorganosiloxanes are preferred as component (B).

Examples of such component (B) include dimethylpolysiloxanes capped at both molecular terminals with dimethylhydrogensiloxy groups, dimethylsiloxane-methylphenylsiloxane copolymers capped at both molecular terminals with dimethylhydrogensiloxy groups, dimethylsiloxane-methylhydrogensiloxane copolymers capped at both molecular terminals with dimethylhydrogensiloxy groups, dimethylsiloxane-methylhydrogensiloxane copolymers capped at both molecular terminals with trimethylsiloxy groups, organopolysiloxanes composed of $H(CH_3)_2SiO_{1/2}$ units and $SiO_{4/2}$ units, and organopolysiloxanes composed of $H(CH_3)_2SiO_{1/2}$ units, $(CH_3)_3SiO_{1/2}$ units, and $SiO_{4/2}$ units.

The viscosity of component (B) is not limited, but kinetic viscosity at 25°C is preferably not less than 1 $mm^2/s$ and not greater than 1000 $mm^2/s$. Note that the kinetic viscosity at 25°C of this polyorganosiloxane may be measured by, for example, an Ubbelohde viscometer in conformance with JIS Z8803.

The content of component (B) is a quantity whereby the amount of silicon-bonded hydrogen atoms in this component is from 0.4 to 20 moles per 1 mole of alkenyl groups in component (A). Preferably, the lower limit thereof is a quantity resulting in 1.0 mole, a quantity resulting in 1.5 moles, or a quantity resulting in 1.8 moles, while the upper limit thereof is a quantity resulting in 10 moles or a quantity resulting in 5.0 moles. This is because if the content of component (B) is within the aforementioned range, the compression set of the obtained silicone rubber sponge is improved.

The water for component (C) is for making the silicone rubber porous by being removed from the silicone rubber after the present composition is crosslinked. The compounded amount of component (C) is in the range of 20 to 500 parts by mass per 100 parts by mass of component (A). Preferably, the lower limit thereof is 30 parts by mass, 40 parts by mass, or 50 parts by mass, while the upper limit thereof is 400 parts by mass, 300 parts by mass, or 200 parts by mass, per 100 parts by mass of component (A). This is because when the content of component (C) is not less than the lower limit of the aforementioned range, the obtained silicone rubber sponge tends to be porous and to have uniform bubbles, while when it is not greater than the upper limit of the aforementioned range, a silicone rubber sponge is easy to obtain.

The water for component (C) is not particularly limited, but tap water, well water, ion exchanged water, distilled water, or the like may be used. It is particularly preferred that component (C) be ion exchanged water from the perspective that dispersion in component (A) is stable.

The cellulose nanofibers for component (D) are for thickening the water of component (C), making it easy to disperse component (C) in component (A), stabilizing the dispersed state of component (C) in component (A), and making the obtained silicone rubber uniformly porous. From the perspectives of dispersibility, thickening properties, and the like, the number-average fiber diameter of component (D) is generally in the range of 2 to 150 nm, preferably in the range of 2 to 100 nm, or in the range of 2 to 10 nm. This is because when the number-average fiber diameter of component (D) is within the aforementioned range, fluidity is maintained and thickening capability is obtained without the fibers settling when dispersed in a dispersing medium.

Such component (D) may be procured as cellulose nanofibers manufactured by Dai-ichi Kogyo Seiyaku Co., Ltd.

The content of component (D) is in the range of 0.01 to 15 parts by mass per 100 parts by mass of component (C), and preferably, the lower limit thereof is 0.05 parts by mass or 0.1 parts by mass, while the upper limit thereof is 10 parts by mass or 5 parts by mass. This is because when the content of component (D) is not less than the lower limit of the aforementioned range, it can sufficiently thicken the water of component (C), and when not greater than the upper limit of the aforementioned range, it can stabilize emulsification of the silicone rubber composition.

The emulsifier for component (E) is for uniformly emulsifying the water in the silicone rubber composition and making the obtained silicone rubber uniformly porous. Examples of such component (E) include anionic, cationic, amphoteric, and nonionic emulsifiers, and specifically, nonionic surfactants such as glycerin fatty acid esters, polyglycerin fatty acid esters, sorbitan fatty acid esters, sucrose fatty acid esters, polyethylene glycol fatty acid esters, polypropylene glycol fatty acid esters, polyoxyethylene glycerin fatty acid esters, polyoxyethylene sorbitan fatty acid esters, polyoxyethylene-polyoxypropylene block copolymers, polyoxyethylene alkyl ethers, polyoxyethylene alkyl phenyl ethers, and polyoxyethylene fatty acid amides; nonionic surfactants composed of polyorganosiloxanes such as polysiloxane-polyoxyethylene graft copolymers; cationic surfactants such as aliphatic amine salts, quaternary ammonium salts, and alkyl pyridinium salts; anionic surfactants such as higher fatty acid salts, higher alcohol sulfuric acid ester salts, alkylbenzene sulfonic acid salts, alkylnaphthalene sulfonic acid salts, and polyethylene glycol sulfuric acid ester salts; and amphoteric surfactants such as carboxybetaine-based and glycine-based surfactants. Nonionic emulsifiers are particularly preferred because they have little effect on crosslinking via the hydrosilylation reaction of the present composition.

These emulsifiers may be used as one type alone or in a combination of two or more types. The HLB value of the emulsifier (when a combination of two or more types of emulsifiers are used in combination, the weight-average HLB value thereof) is preferably not less than 1 and not greater than 10, not less than 1.5 and less than 6, or not less than 3.5 and less than 6.

The content of component (E) is in the range of 0.1 to 15 parts by mass per 100 parts by mass of component (A), and preferably, the lower limit thereof is 0.2 parts by mass, while the upper limit thereof is 10 parts by mass, 5 parts by mass, or 3 parts by mass. This is because when the content of component (E) is not less than the lower limit of the aforementioned range, component (C) can be uniformly dispersed in component (A), while on the other hand, when it is not greater than the upper limit of the aforementioned range, there is no effect on the mechanical characteristics or electrical characteristics of the obtained silicone rubber sponge.

The hydrosilylation reaction catalyst for component (F) is a catalyst for hydrosilylation of the present composition. Examples include platinum-based catalysts such as chloroplatinic acid, alcohol-modified chloroplatinic acid, coordinate compounds of chloroplatinic acid with olefins, vinylsiloxanes, and acetylene compounds, and powder platinum-based catalysts in which they are dispersed in a thermoplastic resin; palladium-based catalysts such as tetrakis(triphenylphosphine)palladium; and rhodium-based catalysts such as chlorotris(triphenylphosphine)rhodium. Platinum-based catalysts are preferred.

The content of component (F) is a quantity that accelerates a hydrosilylation reaction of the present composition, and is preferably a quantity whereby the catalytic metal in component (F) is in the range of 0.01 to 500 ppm, or in the range of 0.1 to 100 ppm, relative to the total amount of the components (A) and (B).

The present composition may further contain a hydrosilylation reaction inhibitor (G) for the purpose of adjusting the crosslinking speed and pot life of the present composition. Examples of the component (G) include alkyne alcohols such as 3-methyl-1-butyn-3-ol, 3,5-dimethyl-1-hexyn-3-ol, 3-phenyl-1-butyn-3-ol, and 1-ethynyl-1-cyclohexanol; ene-yne compounds such as 3-methyl-3-penten-1-yne and 3,5-dimethyl-3-hexen-1-yne; alkenyl group-containing low molecular weight siloxanes such as tetramethyltetravinylcyclotetrasiloxane and tetramethyltetrahexenylcyclotetrasiloxane; and alkyne-containing silanes such as methyl-tris(1,1-dimethyl-2-butynoxy)silane and vinyl-tris(1,1-dimethyl-2-butynoxy)silane.

The content of component (G) in the present composition is selected as appropriate according to the usage method and molding method of the present composition, but is preferably within the range of 0.001 to 5 parts by mass relative to 100 parts by mass of component (A) because the crosslinking speed and pot life of the present composition can be sufficiently adjusted.

The present composition may further contain reinforcing silica fine powder (H) for the purpose of improving the mechanical strength of the obtained silicone rubber sponge. Examples of component (H) include fumed silica and precipitated silica. Furthermore, these silica fine powders may also be surface-treated with linear polyorganosiloxane, cyclic polyorganosiloxane, hexamethyldisilazane, various organosilanes, and the like. Additionally, the specific surface area of component (H) according to the BET adsorption method is preferably from 50 to 350 $m^2$/g or from 80 to 250 $m^2$/g.

The content of component (H) is not greater than 30 parts by mass, not greater than 20 parts by mass, not greater than 15 parts by mass, or not greater than 10 parts by mass, per 100 parts by mass of component (A). This is because when the content of component (H) is not greater than the upper limit of the aforementioned range, mechanical strength can be improved without losing uniformity and fineness of the obtained silicone rubber sponge.

The present composition may also contain an electrically conductive filler for the purpose of imparting electrical conductivity to the obtained silicone rubber sponge. Examples of the electrically conductive filler include carbon-based conductive agents such as carbon black, carbon fibers, carbon nanotubes, and graphite; metal powders such as gold, silver, and nickel; electrically conductive zinc oxide, electrically conductive titanium oxide, and electrically conductive aluminum oxide; electrically conductive fillers obtained by treating the surface of various fillers with electrically conductive coating such as metal plating treatment; and mixtures of two or more types thereof. This electrically conductive filler is preferably carbon black because good electrical conductivity is obtained by adding a small amount. Specific examples include acetylene black, conductive furnace black (CF), superconductive furnace black (SCF), extraconductive furnace black (XCF), conductive channel black (CC), and furnace black or channel black that has been heat treated at a high temperature of approximately 1500°C. The content of this electrically conductive filler is not limited, but is preferably not greater than 100 parts by mass or not greater than 70 parts by mass per 100 parts by mass of component (A) because a good sponge can be obtained.

As other optional components, the present composition may also contain reinforcing fillers other than silica, such as fumed titanium oxide; non-reinforcing fillers such as quartz powder, diatomaceous earth, aluminosilicate, iron oxide, zinc oxide, calcium carbonate, aluminum oxide, cerium oxide, mica, clay, and zinc carbonate; fillers obtained by surface-treating these fillers with organosilicon compounds such as organosilanes and polyorganosiloxane; and preservatives, corrosion inhibitors, pigments, heat resistance agents, flame retardants, internal release agents, plasticizers, acid acceptors, and non-functional silicone oils, as long as the object of the present invention is not lost.

The present composition may be prepared by mixing components (A) through (F) and the other optional components as necessary. To prepare the present composition, a known kneading means such as homomixer, paddle mixer, homo-disper, colloid mill, or vacuum kneading and mixing machine may be used. Examples of methods for preparing the present composition include a method of loading component (A), component (B), component (C), component (D), and component (E) in a mixer, stirring to mix for a prescribed time, and mixing in component (F) immediately before use using a mixing apparatus such as, for example, a static mixer or dynamic mixer; a method of loading component (A), component (C), component (D), and component (E) in a mixer, stirring to mix for a prescribed time, and mixing in component (B) and component (F) immediately before use using a mixing apparatus such as, for example, a static mixer or dynamic mixer; and a method of loading component (A), component (C), component (D), component (E), and component (F) in a mixer, stirring to mix for a prescribed time, and mixing in component (B) immediately before use using a mixing apparatus such as, for example, a static mixer or dynamic mixer.

Furthermore, from the perspective of storage stability, when preparing the present composition, it is preferable to store it as a three-part sponge-formable silicone rubber composition composed of

part A: composition composed of component (A), component (C), component (D), component (E), and component (F), and not containing component (B);
part B: composition composed of component (A), component (C), component (D), and component (E), and not containing component (B) and component (F);
part C: composition composed of component (B), and not containing component (C), component (D), component (E), and component (F); or
a three-part sponge-formable silicone rubber composition composed of
part A': composition composed of component (A), component (F), and, as necessary, component (E), and not containing component (B), component (C), and component (D);
part B': composition composed of component (B), and, as necessary, component (E), and not containing component (C), component (D), and component (F);
part C': composition composed of component (C) and component (D), and not containing component (A), component (B), component (E), and component (F);
and to mix the three parts using a mixing apparatus such as, for example, a static mixer or dynamic mixer immediately before submitting to molding. Furthermore, it is preferable to store it as a two-part sponge-formable silicone rubber composition composed of
part A": composition composed of component (A), component (C), component (D), component (E), and component (F), and not containing component (B);
part B": composition composed of component (B), and not containing component (C), component (D), component (E), and component (F);

and to mix the two parts using a mixing apparatus such as, for example, a static mixer or dynamic mixer immediately before submitting to molding.

The silicone rubber sponge may be formed from the present composition by various methods. Specifically, after the present composition is uniformly emulsified, it is injected into the cavity of a mold for molding, and a silicone rubber molded body is molded in the water-containing state under pressure while holding the temperature at less than 100°C, preferably 50 to 90°C. It is then removed from the mold and submitted to secondary vulcanization at 120 to 250°C to remove the water from the silicone rubber molded body in the water-containing state, and a silicone rubber sponge having fine and uniform bubbles is thereby obtained. Furthermore, a string-like silicone rubber sponge may be produced by discharging the present composition from a nozzle into a rod shape and curing it by introducing it into hot water at a temperature of, for example 80 to 100°C, and then drying the cured product with hot air. Additionally, a silicone rubber sponge sheet may be formed by coating a releasable substrate such as a resin film with the present composition and curing it by heating to a temperature of, for example 50 to 120°C, and removing water by drying with hot air, or, curing while removing water by heating and then removing the releasable substrate. Alternatively, a silicone rubber sponge coated textile may be formed by coating a synthetic fiber textile or glass cloth with the present composition, curing it by heating to a temperature of, for example 50 to 120°C, and removing water by drying with hot air, or, curing while removing water by heating.

The silicone rubber sponge of the present invention will now be described in detail.

The silicone rubber sponge of the present invention is obtained by crosslinking the above-described sponge-formable silicone rubber composition by a hydrosilylation reaction and then removing water from the obtained silicone rubber, or removing water while crosslinking the composition by a hydrosilylation reaction.

The silicone rubber sponge of the present invention is useful as an elastic material of the fixing member of an image forming device. In the case of a fixing roller, there is a silicone rubber sponge layer on a core, but in this case, the material and the dimensions of the core and so forth may be selected as appropriate according to the type of roller. In the case of a fixing belt, there is a silicone rubber sponge layer on an endless belt, but in this case, the material and the dimensions of the endless belt and so forth may be selected as appropriate according to the type of belt.

Additionally, a fluoro resin layer or fluorine rubber layer may be further provided on the outer circumference of the silicone rubber sponge layer. In this case, the fluoro resin layer is formed of a fluoro resin coating material or a fluoro resin tube and coats the silicone rubber sponge layer. Examples of the fluoro resin coating material include latex of polytetrafluoroethylene resin (PTFE) and DAI-EL Latex (fluorine-based latex manufactured by Daikin Industries, Ltd.). Examples of the fluoro resin tube include polytetrafluoroethylene resin (PTFE), tetrafluoroethylene-perfluoroalkyl vinyl ether copolymer resin (PFA), ethylene fluoride-polypropylene copolymer resin (FEP), polyvinylidene fluoride resin (PVDF), and polyvinyl fluoride resin.

The thickness of the silicone rubber sponge layer is not limited but is preferably in the range of 0.05 to 80 mm or in the range of 0.1 to 50 mm because rubber elasticity is effectively utilized. The thickness of the fluoro resin or fluorine rubber layer formed on top of it is preferably in the range of 5 to 200 μm or in the range of 10 to 100 μm.

**Examples**

The sponge-formable silicone rubber composition and silicone rubber sponge of the present invention will be described in further detail through examples. Note that the viscosity in the examples is the value at 25°C. Furthermore, the characteristics of the silicone rubber sponge in the examples are the values measured as follows.

<Viscosity>

The viscosity at 25°C (mPa · s) of the polyorganosiloxane is the value measured by a B-type viscometer in conformance with JIS K7117-1, and the kinetic viscosity (mm$^2$/s) is the value measured by an Ubbelohde viscometer in conformance with JIS Z8803.

<Density>

The density was measured in conformance with JIS K6268.

<Hardness>

The hardness was measured using a test piece 6 mm thick in conformance with the test method using a C-type tester (Asker C durometer) set forth in JIS K 7312.

<Tensile strength, elongation>

The tensile strength and elongation were measured in conformance with JIS K 6251.

<Compression set>

The compression set was measured after 22 hours at 180°C and 25% compression in conformance with JIS K 6262.

<Contraction rate>

The length in the long direction of the test piece for hardness measurement, molded using a mold having a cavity measuring 70 mm in length, 50 mm in width, and 6 mm in thickness, was measured, and substituted into the following formula.

[Math.1]

$$\text{CONTRACTION RATE} = \frac{70.0 - \text{MEASURED VALUE (mm)}}{70.0} \times 100$$

<Mold contamination>

The presence or absence of contamination by precipitate on the mold surface was evaluated after a test piece for hardness measurement was molded, using a mold having a cavity measuring 70 mm in length, 50 mm in width, and 6 mm in thickness.

<Preparation Example 1>

100 parts by mass of polydimethylsiloxane capped at both molecular terminals with dimethylvinylsiloxy groups having a viscosity of 40,000 mPa · s, 50 parts by mass of fumed silica having a BET specific surface area of 400 m$^2$/g, 10 parts by mass of hexamethyldisilazane, 0.36 parts by mass of tetramethyldivinylsilazane, 2 parts by mass of water, and 0.26 parts by mass of dimethylsiloxane-methylvinylsiloxane copolymer capped at both molecular terminals with dimethylhydroxysiloxy groups having a viscosity of 20 mPa · s (vinyl group content approximately 10.9 mass%) were loaded in a Ross mixer, and after mixing until uniform at room temperature, it was processed while heating at 200°C under reduced pressure for 2 hours, to prepare a fluid silica master batch.

<Preparation Example 2>

10 parts by mass of a 2% aqueous dispersion of cellulose nanofibers (number-average fiber diameter 4 nm) (product name Rheocrysta C-2SP manufactured by Dai-ichi Kogyo Seiyaku Co., Ltd.) and 20 parts by mass of ion exchanged water were loaded in a homomixer and mixed at room temperature until uniform, to prepare an aqueous dispersion (c-1) thickened with cellulose nanofibers.

<Preparation Example 3>

10 parts by mass of a 2% aqueous dispersion of cellulose nanofibers (number-average fiber diameter 4 nm) (product name Rheocrysta C-2SP manufactured by Dai-ichi Kogyo Seiyaku Co., Ltd.) and 50 parts by mass of ion exchanged water were loaded in a homomixer and mixed at room temperature until uniform, to prepare an aqueous dispersion (c-2) thickened with cellulose nanofibers.

<Preparation Example 4>

0.85 parts by mass of smectite clay (organic polymer composite hydrophilic purified bentonite manufactured by Hojun Co., Ltd.; pH 6.5) and 99.15 parts by mass of ion exchanged water were loaded in a homomixer and mixed at room temperature until uniform, to prepare an aqueous dispersion (c-3) thickened with smectite clay.

<Working Examples 1 to 3 and Comparative Examples 1 to 2>

The silica master batch, component (A), component (C), component (D), and component (E) were loaded into a homomixer (manufactured by Tokushu Kika Kogyo Co., Ltd.) in the compositions (parts by mass) listed in Table 1, and mixed until uniform at 25°C. Then, component (B), component (F), and component (G) were mixed into the obtained mixture in the compositions (parts by mass) listed in Table 1 and degassed to prepare sponge-formable silicone rubber compositions. Note that in Table 1, SiH/V indicates the number of moles of silicon-bonded hydrogen atoms in the polyorganosiloxane equivalent to component (B) relative to 1 mole of vinyl groups in the polyorganosiloxane equivalent to component (A) in the silicone rubber composition.

The sponge-formable silicone rubber compositions prepared in this manner were crosslinked for 10 minutes at 90°C using a compression molding machine, to prepare various test pieces in the water-containing state. Next, these test pieces were left to stand in an open system for 4 hours at 200°C to remove the water in the test pieces, to produce silicone rubber sponge test pieces. Using these silicone rubber sponge test pieces, density, hardness, tensile strength, elongation, compression set, and contraction rate were measured. Also mold contamination was observed. The results are shown in Table 1.

Silica MB: Silica master batch prepared in Preparation Example 1 (fumed silica content approximately 31 mass%)

(a-1): Dimethylsiloxane-methylvinylsiloxane copolymer capped at both molecular terminals with trimethylsiloxy groups, having a viscosity of 10,000 mPa • s (vinyl group content 0.13 mass%)

(a-2): Dimethylsiloxane-methylvinylsiloxane copolymer capped at both molecular terminals with dimethylvinylsiloxy groups, having a viscosity of 350 mPa • s (vinyl group content approximately 1.17 mass%)

(a-3): Dimethylsiloxane-methylvinylsiloxane copolymer capped at both molecular terminals with trimethylsiloxy groups, having a viscosity of 35,000 mPa • s (vinyl group content approximately 0.50 mass%)

(b-1): Dimethylsiloxane-methylhydrogensiloxane copolymer capped at both molecular terminals with trimethylsiloxy groups, having a kinetic viscosity of 43.5 mm$^2$/s (silicon-bonded hydrogen atom content approximately 0.69 mass%)

(c-1): Aqueous dispersion thickened with cellulose nanofibers prepared in Preparation Example 2 (cellulose nanofiber content 0.67 mass%)

(c-2): Aqueous dispersion thickened with cellulose nanofibers prepared in Preparation Example 3 (cellulose nanofiber content 0.22 mass%)

(c-3): Aqueous dispersion thickened with smectite clay prepared in Preparation Example 4 (smectite clay content 0.85 mass%)

(d-1): Nonionic surfactant (sorbitan fatty acid ester, product name Rheodol SP-O10V manufactured by Kao Corp.; HLB value 4.3)

(d-2): Nonionic surfactant (sorbitan fatty acid ester, product name Rheodol SP-O30V manufactured by Kao Corp.; HLB value 1.8)

(e-1): 1,3-divinyltetramethyldisiloxane solution of 1,3-divinyltetramethyldisiloxane complex of platinum (platinum metal content approximately 4000 ppm)

(f-1): Mixture of 2 parts by mass of ethynylcyclohexanol and 98 parts by mass of polydimethylsiloxane capped at both molecular terminals with dimethylvinylsiloxy groups having a viscosity of 10,000 mPa • s

Pigment MB: Mixture of 40 parts by mass of Bengara (product name Bayferrox manufactured by Bayer AG) and 60 parts by mass of polydimethylsiloxane capped at both molecular terminals with dimethylvinylsiloxy groups having a viscosity of 10,000 mPa • s

[Table 1]

| Item \ Category | | Working Example | | | Comparative Example | |
|---|---|---|---|---|---|---|
| | | 1 | 2 | 3 | 1 | 2 |
| Composition of silicone rubber composition (parts by mass) | Silica MB | 43.9 | 21.8 | 21.8 | 43.9 | 21.8 |
| | (a-1) | 26.3 | 48.1 | 48.1 | 26.3 | 48.1 |
| | (a-2) | 43.4 | 24.9 | 24.9 | 43.4 | 24.9 |
| | (a-3) | - | - | 14.1 | - | 14.1 |
| | (b-1) | 14.8 | 8.7 | 8.7 | 14.8 | 8.7 |
| | (c-1) | 136.4 | 124.3 | - | - | - |
| | (c-2) | - | - | 124.3 | - | - |
| | (c-3) | - | - | - | 136.4 | 124.3 |
| | (d-1) | 1.03 | 1.02 | 1.02 | 1.03 | 1.02 |
| | (e-2) | 0.06 | 0.05 | 0.05 | 0.06 | 0.05 |
| | (e-1) | 0.38 | 0.38 | 0.38 | 0.38 | 0.38 |
| | (f-1) | 0.38 | 0.38 | 0.38 | 0.38 | 0.38 |
| | Pigment MB | 5.5 | 5.5 | 5.5 | 5.5 | 5.5 |
| SiH/Vi | | 4.4 | 3.4 | 3.4 | 4.4 | 3.4 |
| Density (g/cm³) | | 0.564 | 0.558 | 0.536 | 0.601 | 0.544 |
| Hardness | | 48 | 34 | 30 | 48 | 33 |
| Tensile strength (MPa) | | 1.4 | 0.8 | 0.8 | 1.3 | 0.9 |
| Elongation (%) | | 48 | 89 | 90 | 80 | 89 |
| Compression set (%) | | 43 | 28 | 18 | 38 | 23 |
| Contraction rate (%) | | 6.4 | 5.6 | 4.9 | 5.9 | 5.1 |
| Presence/absence of mold contamination | | No | No | No | Yes | Yes |

**Industrial Applicability**

Since the sponge-formable silicone rubber composition of the present invention has excellent moldability and can form a silicone rubber sponge having fine bubbles after molding, it is advantageously used in elastic materials of rollers and belts used in image forming devices such as electronic photographic copiers, laser printers, on-demand printers, and facsimile machines, and sponge applications used at high temperature such as thermal insulation materials, sound absorbing materials, cushioning, packing, gaskets, and pads.

**Claims**

1. A sponge-formable silicone rubber composition comprising:

   (A) 100 parts by mass of a polyorganosiloxane having at least two silicon-bonded alkenyl groups per molecule;
   (B) a polyorganosiloxane having at least two silicon-bonded hydrogen atoms per molecule, in an amount such that an amount of silicon-bonded hydrogen atoms in component (B) is from 0.4 to 20 moles per 1 mole of alkenyl groups in component (A);
   (C) from 20 to 500 parts by mass of water;
   (D) cellulose nanofibers having a number-average fiber diameter of 2 to 150 nm, in an amount of from 0.01 to 15 parts by mass per 100 parts by mass of component (C);
   (E) from 0.1 to 15 parts by mass of an emulsifier; and
   (F) a hydrosilylation reaction catalyst, in an amount to accelerate a hydrosilylation reaction of the composition.

2. The sponge-formable silicone rubber composition according to claim 1, further comprising (G) from 0.001 to 5 parts by mass of a hydrosilylation reaction inhibitor.

3. The sponge-formable silicone rubber composition according to claim 1 or 2, further comprising (H) not greater than 30 parts by mass of a reinforcing silica fine powder.

4. A silicone rubber sponge obtainable by crosslinking the sponge-formable silicone rubber composition described in any one of claims 1 to 3 by a hydrosilylation reaction and then removing water from the obtained silicone rubber, or removing water while crosslinking the composition by a hydrosilylation reaction.

5. The silicone rubber sponge according to claim 4, wherein the sponge is a silicone rubber sponge suitable for a fixing member for an image forming device.

**Patentansprüche**

1. Eine zu einem Schwamm formbare Silikonkautschukzusammensetzung, die Folgendes beinhaltet:

(A) zu 100 Massenteilen ein Polyorganosiloxan mit mindestens zwei siliciumgebundenen Alkenylgruppen pro Molekül;
(B) ein Polyorganosiloxan mit mindestens zwei siliciumgebundenen Wasserstoffatomen pro Molekül in einer solchen Menge, dass eine Menge der siliciumgebundenen Wasserstoffatome in Komponente (B) zu 0,4 bis 20 Mol pro 1 Mol der Alkenylgruppen in Komponente (A) beträgt;
(C) zu 20 bis 500 Massenteilen Wasser;
(D) Cellulose-Nanofasern mit einem Faserdurchmesser im Zahlenmittel von 2 bis 150 nm in einer Menge von 0,01 bis 15 Massenteilen pro 100 Massenteilen der Komponente (C);
(E) zu 0,1 bis 15 Massenteilen einen Emulgator; und
(F) einen Hydrosilylierungsreaktionskatalysator in einer Menge, um eine Hydrosilylierungsreaktion der Zusammensetzung zu beschleunigen.

2. Zu einem Schwamm formbare Silikonkautschukzusammensetzung gemäß Anspruch 1, ferner beinhaltend (G) zu 0,001 bis 5 Massenteile einen Hydrosilylierungsreaktionsinhibitor.

3. Zu einem Schwamm formbare Silikonkautschukzusammensetzung gemäß Anspruch 1 oder 2, ferner beinhaltend (H) zu nicht mehr als 30 Massenteilen ein verstärkendes feines Siliciumdioxidpulver.

4. Ein Silikonkautschukschwamm, der durch das Vernetzen der in einem der Ansprüche 1 bis 3 beschriebenen zu einem Schwamm formbaren Silikonkautschukzusammensetzung durch eine Hydrosilylierungsreaktion und dann Entfernen von Wasser aus dem erhaltenen Silikonkautschuk oder Entfernen von Wasser während des Vernetzens der Zusammensetzung durch eine Hydrosilylierungsreaktion erhalten werden kann.

5. Silikonkautschukschwamm gemäß Anspruch 4, wobei der Schwamm ein Silikonkautschukschwamm ist, der für ein Befestigungselement für eine Bilderzeugungsvorrichtung geeignet ist.

**Revendications**

1. Une composition de caoutchouc de silicone apte à former une éponge comprenant :

(A) 100 parties en masse d'un polyorganosiloxane ayant au moins deux groupes alcényle liés au silicium par molécule ;
(B) un polyorganosiloxane ayant au moins deux atomes d'hydrogène liés au silicium par molécule, dans une quantité telle qu'une quantité d'atomes d'hydrogène liés au silicium dans le constituant (B) va de 0,4 à 20 moles pour 1 mole de groupes alcényle dans le constituant (A) ;
(C) de 20 à 500 parties en masse d'eau ;
(D) des nanofibres de cellulose ayant un diamètre de fibre moyen en nombre de 2 à 150 nm, dans une quantité allant de 0,01 à 15 parties en masse pour 100 parties en masse du constituant (C) ;
(E) de 0,1 à 15 parties en masse d'un émulsifiant ; et
(F) un catalyseur de réaction d'hydrosilylation, dans une quantité permettant d'accélérer une réaction d'hydrosilylation de la composition.

2. La composition de caoutchouc de silicone apte à former une éponge selon la revendication 1, comprenant en sus (G) de 0,001 à 5 parties en masse d'un inhibiteur de réaction d'hydrosilylation.

3. La composition de caoutchouc de silicone apte à former une éponge selon la revendication 1 ou la revendication 2, comprenant en sus (H) pas plus de 30 parties en masse d'une poudre fine de silice renforçante.

4. Une éponge en caoutchouc de silicone pouvant être obtenue par réticulation de la composition de caoutchouc de silicone apte à former une éponge décrite dans l'une quelconque des revendications 1 à 3 par une réaction d'hydrosilylation et ensuite élimination d'eau du caoutchouc de silicone obtenu, ou élimination d'eau pendant la réticulation de la composition par une réaction d'hydrosilylation.

5. L'éponge en caoutchouc de silicone selon la revendication 4, l'éponge étant une éponge en caoutchouc de silicone qui convient pour un élément de fixation destiné à un dispositif de formation d'image.

**EP 3 259 308 B1**

**REFERENCES CITED IN THE DESCRIPTION**

**Patent documents cited in the description**

- JP 2004346248 A

- JP 2008214625 A